(19) **Europäisches Patentamt**
**European Patent Office**
**Office européen des brevets**

(11) **EP 1 787 737 B1**

(12) **EUROPEAN PATENT SPECIFICATION**

(45) Date of publication and mention
of the grant of the patent:
**16.01.2019 Bulletin 2019/03**

(51) Int Cl.:
***B21D 24/10*** (2006.01)

(21) Application number: **05782300.7**

(22) Date of filing: **08.09.2005**

(86) International application number:
**PCT/JP2005/016527**

(87) International publication number:
**WO 2006/028175 (16.03.2006 Gazette 2006/11)**

(54) **PRESS FORMING SYSTEM, PRESS FORMING METHOD, AND COMPUTER PROGRAM PRODUCT**

PRESSFORMSYSTEM, PRESSFORMVERFAHREN UND COMPUTERPROGRAMM PRODUKT

SYSTEME DE FORMAGE PAR PRESSE, PROCEDE DE FORMAGE PAR PRESSE ET PRODUIT DE PROGRAMME INFORMATIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.09.2004 JP 2004264434**

(43) Date of publication of application:
**23.05.2007 Bulletin 2007/21**

(73) Proprietors:
• **Nippon Steel & Sumitomo Metal Corporation Tokyo 100-8071 (JP)**
• **ArcelorMittal 1160 Luxembourg (LU)**

(72) Inventors:
• **Suzuki, Noriyuki, Nippon Steel Corporation Chiba, 2938511 (JP)**

• **Uenishi, Akihiro, Nippon Steel Corporation Chiba, 2938511 (JP)**
• **Kuriyama, Yukihisa, Nippon Steel Corporation Chiba, 2938511 (JP)**
• **Niwa, Toshiyuki, Nippon Steel Corporation Chiba, 2938511 (JP)**
• **Kuwayama, Takuya, Nippon Steel Corporation Chiba, 2938511 (JP)**

(74) Representative: **Vossius & Partner Patentanwälte Rechtsanwälte mbB Siebertstrasse 3 81675 München (DE)**

(56) References cited:
**EP-A1- 0 675 419        WO-A1-99/64939**
**JP-A- 7 266 100        JP-A- 10 128 451**
**JP-B2- 3 338 373**

EP 1 787 737 B1

**Description**

The present invention relates to a press-forming system, a press-forming method, and a computer program, and in particular, belongs to an art suitable for use to press-form a material.

Conventionally, an actual process is performed on a basis that adequate forming conditions, for example, such as a mold shape, a lubricating condition, a forming speed, a blank-holder force, temperatures of a mold and a material to be press-processed are defined in advance by each material by an experience, an experimental production, a simulation by a finite element method, or the like, when a deep-drawing process, a bending process, a cutting process, and so on by using a press-process device are performed for a metallic material.

On the other hand, various metallic materials to be the material are a plate material, a pipe material, a bar material, a wire material, a granular material, and so on obtained from a row material and a scrap passing through multi processes such as a melting - a smelting - a molding - a rolling - a heat treatment - a secondary press-process. Consequently, it is inevitable that a certain degree of variation exists in a mechanical characteristic value of a formed product caused by a variation of process conditions resulting from a variation of chemical components, a nonuniformity of temperature, and so on. Accordingly, there is a case when a poor forming may occur because formability is different by each portion of the material or a production lot, even if the adequate forming conditions are defined in advance as stated above. It goes without saying that a quality control in a material manufacturing process is performed more rigoro.usly to avoid the poor forming..However, an excessive quality control may cause an increase of material cost, and it is not preferable.

Besides, there is a case when the poor forming may occur caused by environmental changes during the press-process, for example, such as a temperature change of a mold caused by a continuous press-process, an abrasion of the mold, changes of a temperature and a humidity of an atmosphere even if the mechanical characteristic value of the material is the same.

An art performing a forming by controlling forming conditions in accordance with conditions of a material and a mold is disclosed in consideration of the above-stated problems (refer to JPH7-266100A).

In such art, a relation is asked in advance between a shape of a press material, mechanical properties and chemical properties of the press material, lamination characteristics such as a plating, and a physical quantity of a surface situation and so on such as oil quantity, and a blank-holder load capable of obtaining a predetermined press quality. An adequate blank-holder load is asked in accordance with an actual physical quantity from the relation between the predetermined physical quantity of the press material and the press-forming condition capable of obtaining the predetermined press quality, and an air pressure of an air cylinder is controlled so that a press-process is performed with the adequate blank-holder load.

Besides, an art is disclosed in which press conditions are adjusted based on machine information and mold information unique to a press-process device (refer to JP H5-285700 A and JP H6-246499 A).

Further, an art is disclosed in which a material to be processed is adjusted to be a predetermined bending angle in a bending press-process using a press brake (refer to JP H7-265957 A, JP H10-128451 A and JP H8-300048 A).

By the way, material characteristics and environments when the material to be processed is press-processed change momentarily.

However, it is extremely difficult to predict the above-stated variation of material characteristics, environmental changes when the material to be processed is press-processed beforehand, although it is disclosed that the blank-holder load is controlled based on the material characteristics, the information unique to the press-process device, and the mold information, in the above-stated JP H7-266100 A, JP H10-128451 A and JP H8-300048 A. Besides, it is difficult to measure a complicated three-dimensional shape such as a drawing press-process and a cutting press-process on the moment, besides, the material to be press-processed during the press-process is engaged by the mold, and therefore, it is very difficult to measure a proper shape, although it is disclosed that the forming conditions are adjusted in accordance with a deformed state of the material to be press-processed during the press-process, in the above-stated Patent Documents 4 to 6.

As it can be seen from the above, there has been a problem that it is difficult to perform the press-process in good state in the conventional arts.

WO 99/64939 A1 discloses an integrated support system for supporting sheet metal machining which is adapted to collect actual machining information obtained during the actual machining process on the machining site and site-specific attribute information that provide the basis for actual machining data and feed back the collected actual machining information and the site-specific attribute information to a sheet metal machining data storing means containing machining information for controlling the machine tools and machining support information relating to the machining information.

EP 0 675 419 A1 discloses a method and apparatus for optimizing press operating condition based on press operating environment and/or physical condition of blank, wherein at least one physical value of the press operating environment (e.g., ambient temperature and humidity and atmospheric pressure) and/or the physical condition (e.g., configuration and dimensions, mechanical and chemical properties and surface condition) of the blank is detected or manually entered into a memory, and an optimum value of the press operating condition is determined on the basis of the detected or manually entered physical value or values, so that the press operating condition is adjusted to the determined optimum value, irrespective of a variation in the press operating environment and/or a variation in the physical condition of the blank.

The present invention is made in consideration of the above-stated problems, and an object thereof is to enable a press-process better than the conventional manners.

The above object can be achieved by the features defined in the claims.

than the conventional manners.

In a press-forming system according to the present invention, a computer for controlling a press machine is connected to a network. On one hand, the computer for controlling the press machine receives detailed material characteristics of metallic materials which are conventionally difficult to obtain on demand from a server side computer via the network, and on the other hand, receives information relating a press environmental change and a press process shape which are conventionally difficult to obtain timely, from various measuring equipments provided at the press machine. Therefore, it is a system in which press-forming conditions adequate to variations of the material characteristics and the press environmental change are calculated as much as possible, the press machine is controlled based on the calculated press forming conditions, and good press-formed products can be obtained.

The invention is described in detail in conjunction with the drawings, in which;

Fig. 1 is a view showing an example of a schematic configuration of a press-forming system;

Fig. 2 is a block diagram showing a part of a functional configuration of a material characteristic data providing device;

Fig. 3 is a view showing parts of configurations of a press-forming device, a control device, and a condition setting calculation device;

Fig. 4A is a view showing an example of a material characteristic inquiry screen;

Fig. 4B is a view showing an example of a material characteristic receive screen;

Fig. 5 is a flow chart explaining an example of operations of the press-forming system;

Fig. 6 is a flow chart explaining an example of operations of the press-forming system subsequent to Fig. 5; and

Fig. 7 is a view showing an example of a relation between a measured value of a punch reaction force, a moving average of ten times of measured values of the punch reaction force, and a blank-holder pressure and the number of times of press-processes (the number of times of forming).

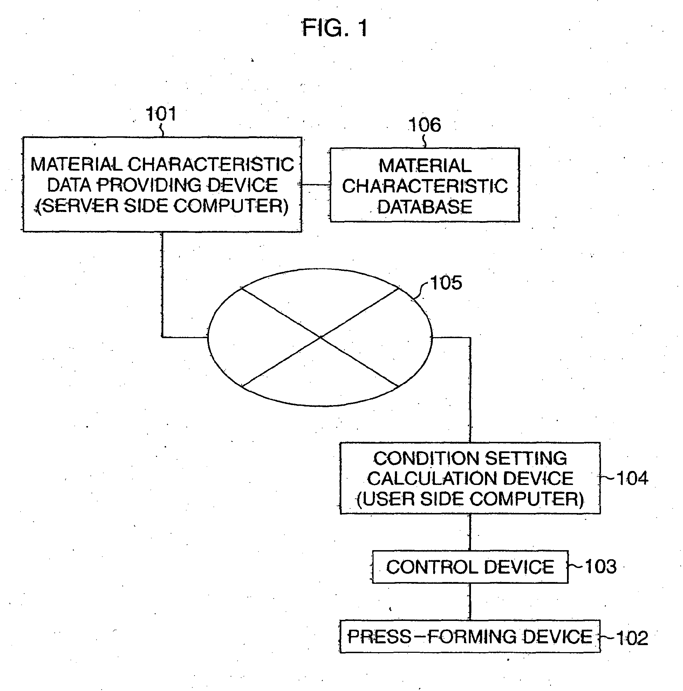

Next, embodiments of the present invention are described with reference to the drawings. Fig. 1 is a view showing an example of a schematic configuration of a press-forming system.

In Fig. 1, the press-forming system has a material characteristic data providing device (server side computer) 101, a press-forming device 102, a control device 103, a condition setting calculation device (user side computer) 104, a network 105, and a material characteristic database 106. As shown in Fig. 1, the material characteristic data providing device 101 and the condition setting calculation device 104 are connected so as to be able to communicate with each other via the network 105.

The material characteristic data providing device 101 is a unit to provide a material characteristic data representing characteristics of a material to be processed (material) which is press-processed by the press-forming device 102 to the condition setting calculation device 104 in accordance with a request from the condition setting calculation device 104, and for example, it is realized by a personal computer.

Incidentally, in the present embodiment, a cold rolled high tensile strength steel sheet with a tensile strength of 590 [MPa], a sheet thickness of 1.4 [mm], a sheet surface size of 1000 [mm] × 500 [mm] is made to be the material to be processed, and such cold rolled high tensile strength steel sheets are packed by 100 sheets to be supplied to the press-forming system. Besides, production lot numbers are supplied to the packages. As the material characteristic data of the cold rolled high tensile strength steel sheet, for example, a combination of one kind or two or more kinds can be cited of the sheet thickness, a yield stress, the tensile strength, 0.2% proof stress, an elongation, an n-value, an r-value, a relational expression between a stress and a strain, a hardness, a temperature, a surface roughness, a friction coefficient, a lubricant film thickness, and so on.

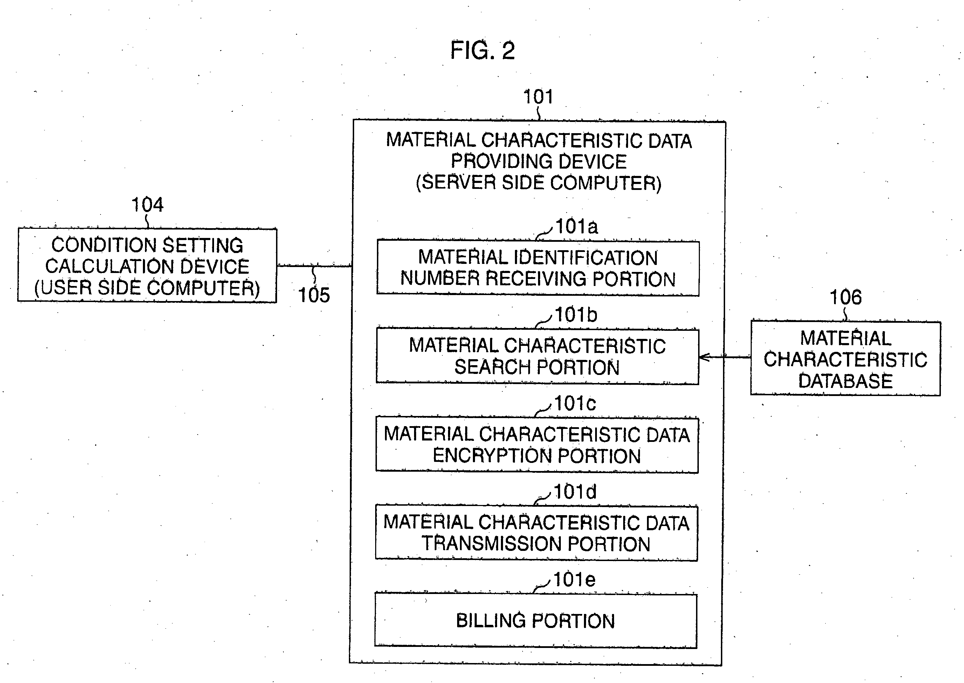

Fig. 2 is a block diagram showing a part of a functional configuration of the material characteristic data providing device 101.

In Fig. 2, the material characteristic data providing device 101 has a material identification number receiving portion 101a, a material characteristic search portion 101b, a material characteristic data encryption portion 101c, a material characteristic data transmission portion 101d, and a billing portion 101e.

The material identification number receiving portion 101a is to receive a material identification number transmitted from the condition setting calculation device 104 as described later. In the present embodiment, the material identification number is made to be the production lot number supplied to the package.

The material characteristic search portion 101b searches the material characteristic data registered in correspondence with the material identification number from the material characteristic database 106 when the material identification number is received by the material identification number receiving portion 101a. As stated above, the material characteristic data are registered to the material characteristic database 106 by each material identification number.

The material characteristic data encryption portion 101c encrypts the material characteristic data searched by the material characteristic search portion 101b.

The material characteristic data transmission portion 101d transmits the encrypted material characteristic data to the condition setting calculation device 104.

The billing portion 101e updates, for example, a transmission history file (client name, connection date and time, transmission data amount, and so on) each time when the material characteristic data is transmitted to the user side condition setting calculation device 104, aggregates the transmission history file periodically, and bills in accordance with a total communication amount.

The description is returned to Fig. 1. The condition setting calculation device 104 is to ask forming conditions (process conditions) of the material to be processed by using the material characteristic data transmitted from the material characteristic data providing device 101 as stated above, and it is realized by, for example, a personal computer.

The control device 103 is to control operations of the press-forming device 102 and to monitor the operations of the press-forming device 102 in accordance with the forming conditions asked by the condition setting calculation device 104. The press-forming device 102 is to press-form the material to be processed based on the control by the control device 103. As stated above, a press-forming apparatus is constituted by the press-forming device 102 and the control device 103 in the present embodiment.

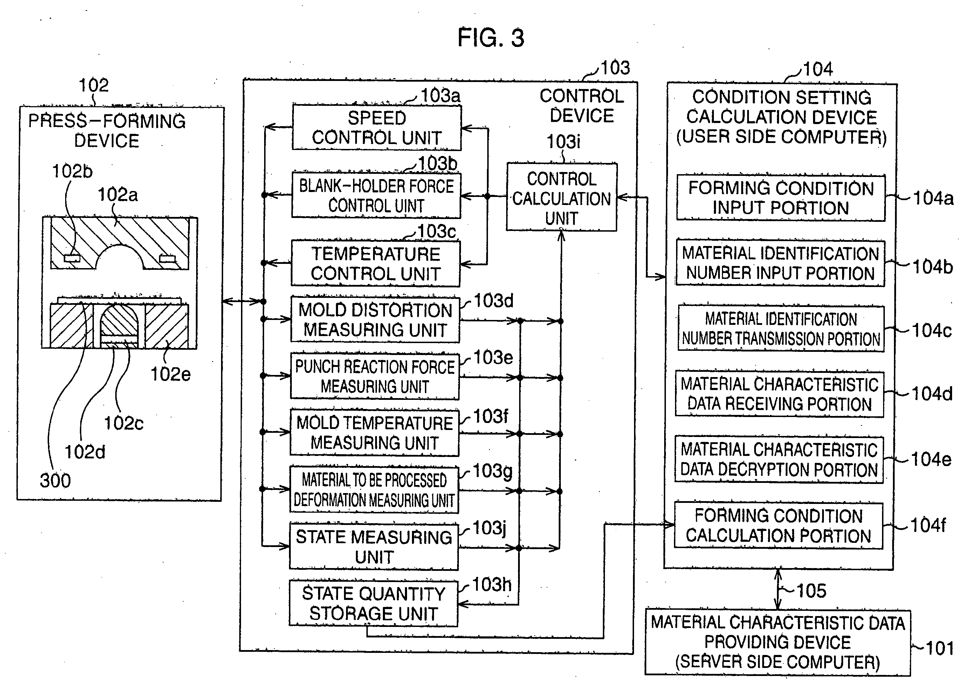

Fig. 3 is a view showing parts of configurations of the press-forming device 102, the control device 103, and the condition setting calculation device 104.

In Fig. 3, the press-forming device 102 has a die 102a, a strain sensor 102b, a load cell 102c, a punch 102d, and a blank-holder 102e.

As shown in Fig. 3, the press-forming device 102 which is constituted such that a material to be processed 300 is press-processed along a forming surface of the punch 102d by driving the die 102a in a longitudinal direction, is adopted in the present embodiment.

The strain sensor 102b is to detect a distortion of a mold constituted by the die 102a, the punch 102d, and so on. The load cell 102c is to detect a punch reaction force and so on. The blank-holder 102e is to prevent an occurrence of wrinkles when the material to be processed 300 is press-processed.

Incidentally, it goes without saying that members necessary for the press-process of the material to be processed 300 such as an air cylinder, a hydraulic cylinder, a heater, a.hydraulic controller are provided at the press-forming device 102 in addition to the ones shown in Fig. 3.

The control device 103 has a speed control device 103a, a blank-holder force control device 103b, a temperature control device 103c, a mold distortion measuring unit 103d, a punch reaction force measuring unit 103e, a mold temperature measuring unit 103f, a material to be processed deformation measuring unit 103g, a state quantity storage unit 103h, a control calculation unit 103i, and a state measuring unit 103j.

The speed control device 103a is to control a forming speed defined by a drive speed and so on of the die 102a. The blank-holder force control device 103b is to control the blank-holder pressure (blank-holder force) provided by the blank holder 102e to the material to be processed 300. The temperature control device 103c is to control the temperature of the mold.

The mold distortion measuring unit 103d is to measure a distortion of the mold by reading a detected value of the strain sensor 102b. The punch reaction force measuring unit 103e is to measure the punch reaction force by reading a detected value of the load cell 102c. The mold temperature measuring unit 103f is to measure the temperature of the mold and the material to be processed 300 by reading a detected value of a temperature sensor (thermocouple) attached to the die 102a, the punch 102d, and so on.

The material to be processed deformation measuring unit 103g is to measure a degree of deformation of the material to be processed 300. The state measuring unit 103j is to measure the material to be processed 300 before a press-process to obtain a material characteristic measurement data. As the material characteristic measurement data, data based on a hardness, a surface roughness, a friction coefficient of the material to be processed 300 and so on can be cited.

The state quantity storage unit 103h is to store a history of state quantity of the press-forming device 102 measured by the mold distortion measuring unit 103d, the punch reaction force measuring unit 103e, the mold temperature measuring unit 103f, the material, to be processed deformation measuring unit 103g, the state measuring unit 103j as stated above.

As stated above, in the present embodiment, a process condition control means is constituted by the control device 103.

The condition setting calculation device 104 has a forming condition input portion 104a, a material identification number input portion 104b, a material identification number transmission portion 104c, a material characteristic data receiving portion 104d, a material characteristic data decryption portion 104e, and a forming condition calculation portion 104f.

The forming condition input portion 104a is to input and store basic forming conditions based on an operation of an operation portion by a user. In the present embodiment, the forming condition input portion 104a inputs the blank-holder force, the forming speed, the mold temperature, and so on as the basic forming conditions.

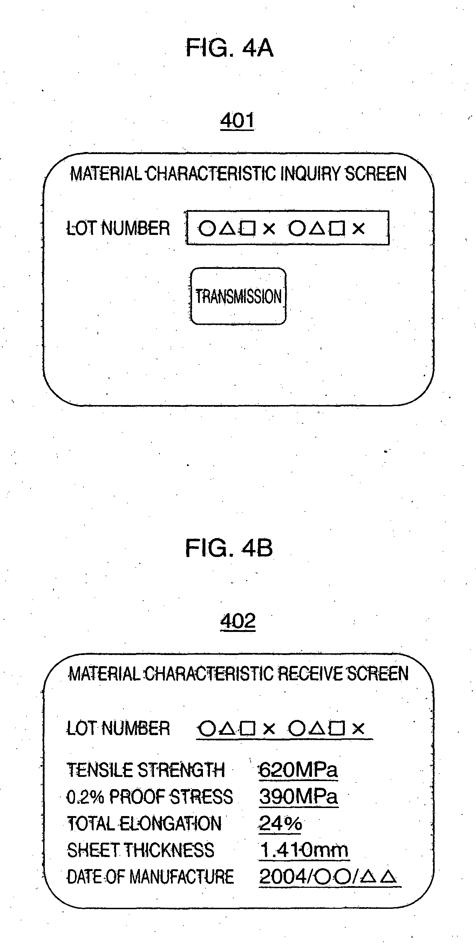

The material identification number input portion 104b is to input the material identification number based on a user's operation for a material characteristic inquiry screen 401 as shown in Fig. 4A.

The material identification number transmission portion 104c is to transmit the material identification number (production lot number) to the material characteristic data providing device 101 when a transmission button is pressed by the user after the material identification number (production lot number) is inputted for the material characteristic inquiry screen 401 shown in Fig. 4A.

The material characteristic data receiving portion 104d is to receive an encrypted material characteristic data transmitted from the material characteristic data providing device 101 as a replay for the material identification number transmitted by the material identification number transmission portion 104c.

The material characteristic data decryption portion 104e is to decrypt the encrypted material characteristic data to be used for a calculation of the forming conditions.

Incidentally, in the condition setting calculation device 104 of the present embodiment, a material characteristic receive screen 402 as shown in Fig. 4B is displayed on a monitor after the material characteristic data is received at the material characteristic data receiving portion 104d, and the material characteristic data is decrypted. However, the decrypted material characteristic data may be directly used for the calculation of the forming conditions without displaying on the monitor, to make the material characteristic data invisible for the user, and thereby, a reuse (unauthorized copy) of the material characteristic data can be prevented.

The forming condition calculation portion 104f is to calculate the forming conditions in the press-forming device 102 by using the material characteristic data received by the material characteristic data receiving portion 104d, the state quantity of the press-forming device 102 stored in the state quantity storage unit 103h, and so on.

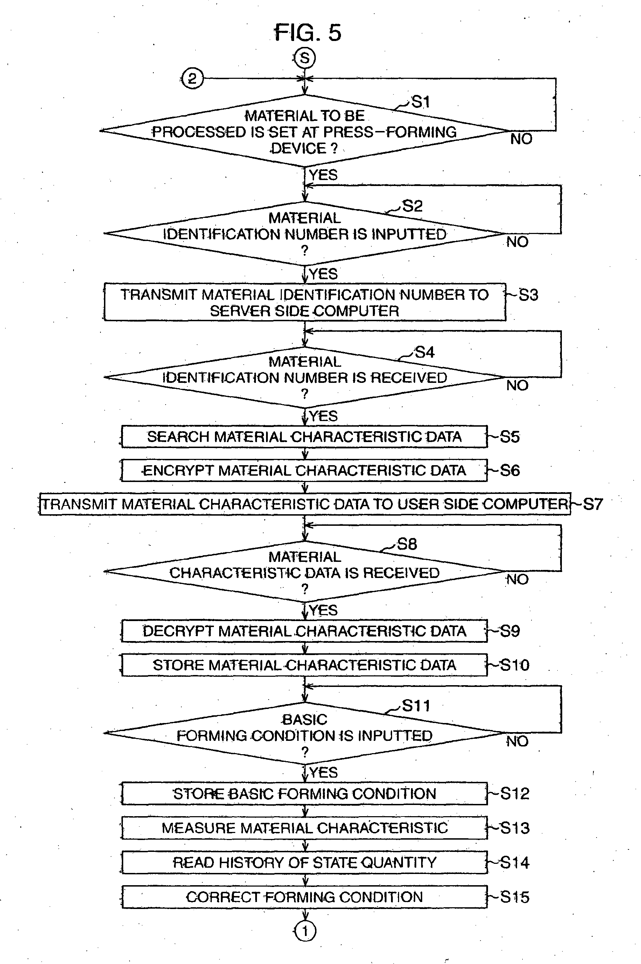

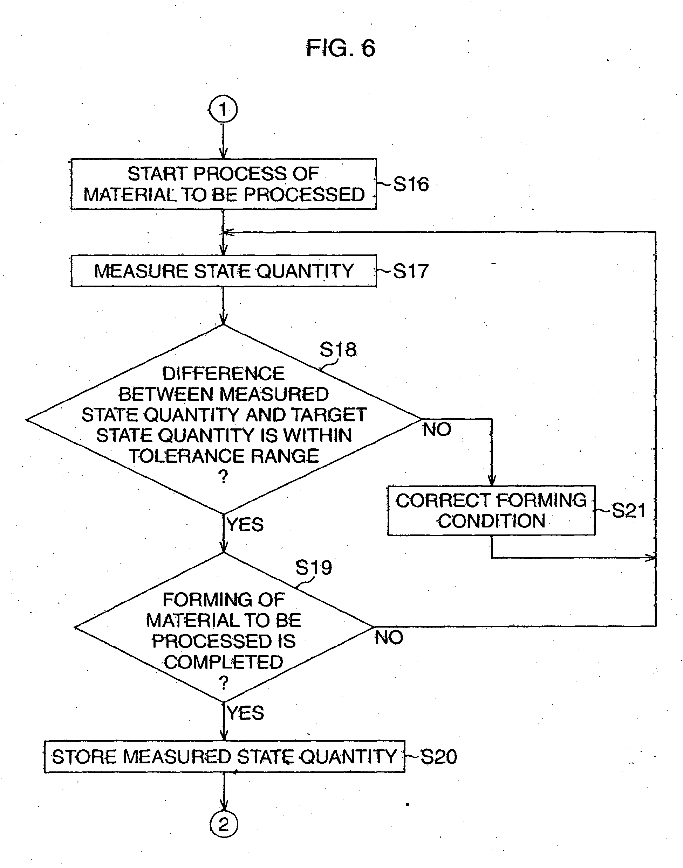

Next, an example of operations of the press-forming system of the present embodiment is described with reference to the flow charts in Fig. 5 and Fig. 6.

At first, at the step S1, the press-forming system waits until the material to be processed 300 is set to the press-forming device 102. When the material to be processed 300 is set to the press-forming device 102, the process goes to the step S2, and the material identification number input portion 104b of the condition setting calculation device 104 judges whether the material identification number is inputted and the transmission button is pressed or not based on the user's operation for the material characteristic inquiry screen 401 shown in Fig. 4A.

When the material identification number is inputted and the transmission button is pressed as a result of the above judgment, the process goes to the step S3, and the material identification number transmission portion 104c of the condition setting calculation device 104 transmits the material identification number judged to be inputted at the step S2 to the material characteristic data providing device 101.

Next, at the step S4, the material identification number receiving portion 101a of the material characteristic data providing device 101 judges whether the material identification number transmitted at the step S3 is received or not.

When the material identification number is received as a result of this judgment, the process goes to the step S5, and the material characteristic search portion 101b, of the material characteristic data providing device 101 obtains the material characteristic data corresponding to the material identification number judged to be received at the step S4 from the material characteristic database 106.

Next, at the step S6, the material characteristic data encryption portion 101c of the material characteristic data providing device 101 encrypts the material characteristic data searched at the step S5.

Next, at the step S7, the material characteristic data transmission portion 101d of the material characteristic data providing device 101 transmits the material characteristic data encrypted at the step S6 to the condition setting calculation device 104.

Next, at the step S8, the material characteristic data receiving portion 104d of the condition setting calculation device 104 judges whether, the encrypted material characteristic data transmitted at the step S7 is received or not.

When the material characteristic data is received as a result of this judgment, the process goes to the step S9, and the material characteristic data decryption portion 104e of the condition setting calculation device 104 decrypts the material characteristic data.

Next, at the step S10, the material characteristic data receiving portion 104d stores the decrypted material characteristic data at the step S9.

Next, at the step S11, the forming condition input portion 104a of the condition setting calculation device 104 judges whether the basic forming conditions are inputted based on the user's operation or not. When the basic forming conditions are inputted as a result of this judgment, the process goes to the step S12, and the forming condition input portion 104a stores the basic forming conditions inputted at the step S11.

Next, at the step S13, the state measuring unit 103j of the control device 103 measures the hardness, the surface roughness, the friction coefficient, and so on of the material to be processed 300 which is set at the step S1, and stores the material characteristic measurement data based on the measured hardness, surface roughness, and friction coefficient of the material to be processed 300.

Next, at the step S14, the forming condition calculation portion 104f of the condition setting calculation device 104 reads the history of the state quantity of the press-forming device 102 stored in the state quantity storage unit 103h of the control device 103. At this time, the forming condition calculation portion 104f also reads the material characteristic measurement data stored at the step S13.

Next, at the step S13, the forming condition calculation portion 104f corrects the forming conditions of the press-forming device 102 based on the material characteristic data stored at the step S10, the basic forming conditions stored at the step S12, and the history of the state quantity of the press-forming device 102 and the material characteristic measurement data read at the step S14.

Concretely speaking, in the present embodiment, an initial value "C0(i)" of the forming condition is corrected by using a following (expression 1).

$$C0'(i) = C0(i) \times (1 + \Sigma (T1(i, j) \times P(j) / P0(j) - 1))); \ i = 1 \ to \ L, \ j = 1 \ to \ M \ \dots \ (expression \ 1)$$

In the above-stated (expression 1), "C0'(i)" is the forming condition after the correction. "T1(i, j)" is an influence function matrix representing a relation between a deviation of the material characteristic of the material to be processed 300 relative to a standard value, and a correction amount of the forming condition. "P(j)" is an actual performance value of each material characteristic. "P0(j)" is the standard value of each material characteristic. "M" is the number of material characteristics. "L" is the number of setting values of the forming condition.

Here, the initial value "C0(i)" of the forming conditions may be constant during the forming, or changed during the forming. When it is changed during the forming, for example, a setting value for a stroke amount of the punch 102d may be provided.

There is a method in which respective components of the influence function matrix "T1(i, j)" are asked from a change of an optimal forming condition (sensitivity analysis) relative to changes of various material characteristics, by using a forming simulation by a finite element method. Besides, there also is a method in which the respective components are asked statistically from a relation between a variation of the material characteristics and the forming conditions and product quality (crack, wrinkle, springback, surface distortion, and so on) in an actual mass production press. Further, there also is a method and so on in which an actual measured value of the product quality is inputted to the press-forming device 102 as an instruction data, and for example, it is created and updated by using a learning function by a neural network. Incidentally, a constitution and a method of formulation of the material characteristic value and the forming condition are not limited to the above, and arbitrary settings are possible.

Next, at the step S16, the control calculation unit 103i reads the forming conditions of the press-forming device 102 corrected at the step S15, and outputs a control command based on the read forming conditions to the speed control device 103a, the blank-holder force control device 103b, and the temperature control device 103c. The speed control device 103a, the blank-holder force control device 103b, and the temperature control device 103c control the press-forming device 102 based on this control command. Accordingly, the press-process of the material to be processed 300 is started.

Next, at the step S17, the mold distortion measuring unit 103d, the punch reaction force measuring unit 103e, the mold temperature measuring unit 103f, and the material to be processed deformation measuring unit 103g measure the state quantity of the press-forming device 102 during the press-process.

Next, at the step S18, the forming condition calculation portion 104e judges whether a difference of the state quantity measured at the step S17 and a target state quantity defined in advance is within a tolerance range or not. When the difference is within the tolerance range as a result of this judgment, the process goes to the step S19, and the control calculation unit 103i judges whether the press-process (forming) of the material to be processed 300 is completed or not, for example, based on the measured result of the material to be processed deformation measuring unit 103g.

When the press-process (forming) of the material to be processed 300 is completed as a result of this judgment, the process goes to the step S20, and the state quantity measured at the step S17 is stored in the state quantity storage unit 103h. The process then goes back to the step S1, and waits for an acceptance of the next material to be processed 300. On the other hand, when the press-process (forming) of the material to be processed 300 is not completed, the process goes back to the step S17, and the state quantity is measured again.

When it is judged that the difference of the state quantity measured at the step S17 and the target state quantity defined in advance is not within the tolerance range at the above-stated step S18, the process goes to the step S21, and the forming condition calculation portion 104f corrects, the forming condition. The process then goes back to the step S17, and the state quantity is measured again.

Concretely speaking, in the present embodiment, the forming condition "C0'(i)" asked by the above-stated (expression 1) is corrected by using a following (expression 2).

$$C(i) = C0'(i) \times (1 + \Sigma (T2(i, k) \times S(k) / S0(k) - 1))); \quad i = 1 \text{ to } L, \quad k = 1 \text{ to } N \dots (\text{expression 2})$$

In the above-stated (expression 2), "C(i)" is a correction value of the forming condition. "T2(i, k)" is an influence function matrix representing a relation between a deviation of the measured various state quantities relative to a standard value and a correction amount of the forming condition. "S(k)" is the state quantity measured at the step S17. "S0(k)" is the standard value of the state quantity. "N" is the number of the state quantities.

There is a method in which respective components of the influence function matrix "T2(i, k)" are asked from the change of the optimal forming condition (sensitivity.analysis) relative to the changes of various material characteristics by using the forming simulation by the finite element method, as same as the respective components of the influence function matrix "T1(i, j)". Besides, there also is a method in which the respective components are asked statistically from the relation between the variation of the material characteristics and the forming condition and the product quality (crack, wrinkle, springback, surface distortion, and so on) in the actual mass production press. Further, there also is a method and so on in which the actual measured value of the product quality is inputted to the press-forming device 102 as the instruction data, and for example, it is created and updated by using the learning function by the neural network. Incidentally, the constitution and the method of formulation of the state quantity are not limited to the above, and arbitrary settings are possible.

As stated above, in the present embodiment, the actual performance value and the standard value of the material characteristic are compared, the forming conditions such as the forming speed and the blank-holder pressure are corrected in accordance with the compared result, and the press-process of the material to be processed 300 is to be started with the corrected forming conditions. Therefore, it becomes possible to reduce the occurrences of cracks and wrinkles as much as possible, and to suppress influences of variable factors difficult to predict such as the variation of the material characteristics, the environmental change when the material to be processed 300 is press-processed. Accordingly, it becomes possible to obtain the adequate forming conditions, and to obtain good formed products.

Incidentally, in the flow charts in Fig. 5 and Fig. 6, a case is described in which the forming conditions are corrected every time when one piece of material to be processed 300 is press-processed, but it is possible to correct the forming conditions by the production lot as a unit. In this case, for example, the process is to be transferred to the step S16 not to the step S1 after the process of the step S20 is completed in the flow chart in Fig. 6.

Besides, in the present embodiment, the material identification number (production lot number) is inputted by the operation of the operation portion such as a keyboard or a mouse provided at the condition setting calculation device 104, but the material identification number is not necessarily to be inputted as stated above. For example, a barcode storing information relating to the production lot number is attached to the material to be processed 300, this information of the barcode is read by a barcode reader, the production lot number of the material to be processed 300 is discriminated from the read barcode information, and the discriminated production lot number is to be transmitted to the material characteristic data providing device 101.

Further, it can be constituted such that the production lot number stored in an IC tag, a disk recording medium such as a flexible disk and a magnetic optical disk is to be transmitted to the material characteristic data providing device 101.

-First Example-

Next, a first example is described.

In the present example, at first, a cold rolled high tensile strength steel sheet with a tensile strength of 590 [MPa], a sheet thickness of 1.4 [mm], a size of a sheet surface of 1000 [mm] $\times$ 500 [mm] is made to be a material to be processed.

Next, the condition setting calculation device 104 receives actual performance values of the tensile strength, 0.2% proof stress, a total elongation, and the sheet thickness from the material, characteristic data providing device, 101 as the material characteristic data.

Next, setting values of the forming speed and the blank-holder pressure are corrected by each production lot by using the above-stated (expression 1) based on the actual performance values of the material characteristics before the press-process of the material to be processed 300 is performed. Concretely speaking, for example, the standard value "P0(j)" of the material characteristics in the material to be processed 300 as in a following (expression 3), the actual performance value "P(j)" of the material characteristics as in a (expression 4), the standard value "C0(i)" of the forming conditions as in a (expression 5), and the influence function matrix "T1(i, j)" as shown in a (expression 6), are respectively substituted to the above-stated (expression 1), and then, the correction value "C0'(i)" of the forming conditions as in a following (expression 7) is obtained.

[Formula 1]

$$P0(j) = \left\{ \begin{array}{l} \text{TENSILE STRENGTH [MPa]} \\ \text{0.2\% PROOF STRESS [MPa]} \\ \text{TOTAL ELONGATION [\%]} \\ \text{SHEET THICKNESS [mm]} \end{array} \right\} = \left\{ \begin{array}{l} 604.8 \\ 399.8 \\ 23.6 \\ 1.4 \end{array} \right\}$$

NOTE THAT j = 1 to 4

$\cdots$(EXPRESSION 3)

$$P(j) = \left\{ \begin{array}{l} 620 \\ 390 \\ 24 \\ 1.41 \end{array} \right\}$$

$\cdots$(EXPRESSION 4)

$$C0(i) = \left\{ \begin{array}{l} \text{FORMING SPEED [mm/sec]} \\ \text{BLANK-HOLDER PRESSURE [Ton]} \end{array} \right\} = \left\{ \begin{array}{l} 50.0 \\ 150.0 \end{array} \right\}$$

NOTE THAT i = 1 to 2

$\cdots$(EXPRESSION 5)

$$T1(i, j) = \left[ \begin{array}{cccc} -0.5 & -0.5 & 0.5 & 0.5 \\ 0.5 & 0.5 & 0.5 & 0.5 \end{array} \right]$$

$\cdots$(EXPRESSION 6)

$$C0'(i) = \left\{ \begin{array}{l} \text{FORMING SPEED [mm/sec]} \\ \text{BLANK-HOLDER PRESSURE [Ton]} \end{array} \right\} = \left\{ \begin{array}{l} 50.6 \\ 151.9 \end{array} \right\}$$

$\cdots$(EXPRESSION 7)

Next, a test press is performed, and the punch reaction force measuring unit 103e and the mold distortion measuring unit 103d respectively measure the punch reaction force and the mold distortion during the forming. After it is confirmed that the press-processed product obtained by performing the test press is a non-defective without any cracks, wrinkles, or the like, the forming condition calculation portion 104f of the condition setting calculation device 104 sets the forming speed and the blank-holder pressure obtained by the above-stated (expression 7), and measured maximum value of the punch reaction force, and maximum value of the mold distortion, as the standard values of the state quantity. In the example shown in the above-stated (expression 3) to (expression 7), the forming condition calculation portion 104f sets the standard value "S0(k)" of the state quantity shown in the following.

[Formula2]

$$S0(k)=\left\{\begin{array}{l}\text{PUNCH REACTION FORCE [Ton]}\\ \text{MOLD DISTORTION }[\mu]\end{array}\right\}=\left\{\begin{array}{l}500\\900\end{array}\right\}$$

$$\cdots\text{(EXPRESSION 8)}$$

NOTE THAT k=1 to 2

The forming condition calculation portion 104f calculates the forming condition "C(i)" by using the above-stated (expression 2), and outputs the calculated forming condition "C(i)" to the control calculation unit 103i of the control device 103. The control calculation unit 103i starts the press-process of the material to be processed 300 based on this forming condition "C(i)".

After that, the maximum value of the punch reaction force and the maximum value of the mold distortion during the forming are measured every time when the press-process is performed, and the forming speed and the blank-holder pressure are corrected in accordance with the difference between the measured maximum value of the punch reaction force and maximum value of the mold distortion, and the set standard value.

Concretely speaking, for example, when the measured value "S(k)" of the state quantity defined from the maximum value of the punch reaction force and the maximum value of the mold distortion during the forming becomes to be as shown in following (expression 9), the forming condition calculation portion 104f substitutes the setting value "C0'(i)" of the forming condition shown in the (expression 7), the standard value "S0(k)" of the state quantity shown in the (expression 8), and the influence function matrix "T2(i, k)" shown in a following (expression 10) to the (expression 2), and obtains the correction value "C(i)" of the forming condition as shown in a following (expression 11). Incidentally, in the above description, the influence function matrix "T2(i, k)" is to be set in advance.

[Formula3]

$$S(k)=\left\{\begin{array}{l}\text{PUNCH REACTION FORCE [Ton]}\\ \text{MOLD DISTORTION }[\mu]\end{array}\right\}=\left\{\begin{array}{l}520\\950\end{array}\right\}$$

$$\cdots\text{(EXPRESSION 9)}$$

$$T2(i,k)=\left[\begin{array}{cc}0.5 & 0.5\\ -0.5 & -0.5\end{array}\right]\quad\cdots\text{(EXPRESSION 10)}$$

$$C(i)=\left\{\begin{array}{l}\text{FORMING SPEED [mm/sec]}\\ \text{BLANK}-\text{HOLDER PRESSURE [Ton]}\end{array}\right\}=\left\{\begin{array}{l}53.0\\144.7\end{array}\right\}$$

$$\cdots\text{(EXPRESSION 11)}$$

As stated above, in the present example, the punch reaction force and the mold distortion during the press-process are measured in addition to the material characteristic data received from the material characteristic data providing device 101, and the forming speed and the blank-holder pressure are corrected in accordance with the measured results. Therefore, it becomes possible to obtain the more adequate forming conditions of the material to be processed 300, and to obtain a better formed product.

Incidentally, in the present example, the forming speed and the blank-holder pressure are corrected every time when the press-process is performed, but they may be corrected by every plural press-processes. Besides, the maximum value of the punch reaction force and the maximum value of the mold distortion during the press-process are made to be the standard value "S0(k)" of the state quantity, but the standard value "S0(k)" of the state quantity can be set by totally judging from a time-series data of the punch reaction force and a time-series data of the mold distortion during the press-process. For example, values at plural points of the time-series data may be used to evaluate the standard value "S0(k)" of the state quantity.

Further, in the present example, the press-process is performed .without changing the forming speed and the blank-holder pressure shown in the (expression 11), but these values may be changed during the press-process in accordance with a punch stroke and so on.

-Second Example-

Next, a second example is described.

As stated above, the condition setting calculation device 104 receives the actual performance values of the tensile strength, the 0.2% proof stress, the total elongation, and the sheet thickness from the material characteristic data providing device 101 as the material characteristic data also in the present example. In addition, in the present example, the condition setting calculation device 104 inputs a material! characteristic data which cannot be provided by the material characteristic data providing device 101, , namely, the material characteristic data which cannot be known by an operator of the material characteristic data providing device 101, based on an operation by a user of the operation portion provided at the condition setting calculation device 104. Incidentally, here, a case is described as an example when an actual performance value of a lubricant film thickness is inputted as an example of such material characteristic data.

The forming condition calculation portion 104f corrects the forming conditions such as the forming speed and the blank-holder pressure by using the (expression 1) based on the received material characteristic data and the inputted material characteristic data.

Concretely speaking, for example, the forming conditions are corrected by substituting the standard value "P0(j)" of the material characteristics shown in a following (expression 12), the influence function matrix "T1(i, j)" shown in a following (expression 13), and the actual performance value "P(j)" of the material characteristics defined from the above-stated material characteristic data to the (expression 1).

[Formula 4]

$$
P0(j)=\left\{\begin{array}{l}\text{TENSILE STRENGTH [MPa]}\\ \text{0.2\% PROOF STRESS [MPa]}\\ \text{TOTAL ELONGATION [\%]}\\ \text{SHEET THICKNESS [mm]}\\ \text{LUBRICANT FILM THICKNESS [}\mu\text{m]}\end{array}\right\}=\left\{\begin{array}{c}604.8\\ 399.8\\ 23.6\\ 1.4\\ 10.0\end{array}\right\}
$$
$$\cdots\text{(EXPRESSION 12)}$$

NOTE THAT $j=1$ to $5$

$$
T1(i,j)=\begin{bmatrix}-0.5 & -0.5 & 0.5 & 0.5 & -0.5\\ 0.5 & 0.5 & 0.5 & 0.5 & 0.5\end{bmatrix}\cdots\text{(EXPRESSION 13)}
$$

As stated above, in the present example, the forming conditions are corrected with considering the material characteristic data which can be known only at the user side using the condition setting calculation device 104, in addition to the material characteristic data received from the material characteristic data providing device 101, and therefore, it is possible to suppress an influence of variable factors such as a lubricity between the mold and the material to be processed 300 and a surface property, in addition to the variation of the material characteristics and the environmental change. Accordingly, a more adequate forming condition can be obtained.

-Third Example-

Next, a third example is described.

As stated above, the condition setting calculation device 104 receives the actual performance values of the tensile strength, the 0.2% proof stress, the total elongation, and the sheet thickness from the material characteristic data providing device 101 as the material characteristic data also in the present example. However, in the present example, a representative value of the production lot (for example, the representative value of 100 sheets of materials to be processed 300) is received, as the material characteristic, data.

Besides, in the present example, the condition setting calculation device 104 inputs the material characteristic data having a large variety depending on the material to be processed 300, based on the operation of the operation portion by the user provided at the condition setting calculation device 104. In the present embodiment, an actual performance value of Vickers hardness of the material to be processed 300 before the press-process is inputted as an example of such material characteristic data.

The forming condition calculation portion 104f corrects the forming conditions such as the forming speed and the blank-holder pressure by using the (expression 1) based on the received material characteristic data and the inputted material characteristic data.

Concretely speaking, for example, the standard value "P0(j)" of the material characteristics shown in a following (expression 14), the influence function matrix "T1(i, j)" shown in a following (expression 15), and the actual performance value "P(j)" of the material characteristics defined from the above-stated material characteristic data are substituted to the (expression 1) to set the forming conditions.

[Formula5]

$$P0(j)=\begin{Bmatrix} \text{TENSILE STRENGTH [MPa]} \\ \text{0.2\% PROOF STRESS [MPa]} \\ \text{TOTAL ELONGATION [\%]} \\ \text{SHEET THICKNESS [mm]} \\ \text{VICKERS HARDNESS [Hv]} \end{Bmatrix} = \begin{Bmatrix} 604.8 \\ 399.8 \\ 23.6 \\ 1.4 \\ 175 \end{Bmatrix}$$

NOTE THAT $j=1$ to 5

$\cdots$(EXPRESSION 14)

$$T1(i,j)=\begin{bmatrix} -0.5 & -0.5 & 0.5 & 0.5 & -0.5 \\ 0.5 & 0.5 & 0.5 & 0.5 & 0.5 \end{bmatrix}$$

$\cdots$(EXPRESSION 15)

As stated above, in the present example, the material characteristic data which has a large effect on the press-process unless it is considered by each material to be processed 300, is measured at the user side separately, and the forming conditions are corrected with considering the measured material characteristic data. Therefore, it is possible to press-process the material to be processed 300 adequately even if the material characteristic data received from the material characteristic data providing device 101 is the representative value of the production lot.

-Fourth example-

Next, a fourth example is described.

As stated above, the condition setting calculation device 104 receives the actual performance values of the tensile strength, the 0.2% proof stress, the total elongation, and the sheet thickness from the material characteristic data providing device 101 as the material characteristic data also in the present example. In addition, in the present example, when the punch reaction force during the press-process exceeds a tolerance range, the blank-holder pressure is adjusted so that the punch reaction force is within the tolerance range, and the press-process is continued with the adjusted bank-holder pressure.

Concretely speaking, for example, the standard value "P0(j)" of the material characteristics in the material to be processed 300 as in a following (expression 16), the actual performance value "P(j)" of the material characteristics as in a (expression 17), the standard value "C0(i)" of the forming conditions as in a (expression 18), and the influence function matrix "T1(i, j)" as shown in a (expression 19) are respectively substituted to the (expression 1), and the correction value "C0'(i)" of the forming conditions as in a following (expression 20) can be obtained.

[Formula6]

$$P0(j) = \left\{ \begin{array}{l} \text{TENSILE STRENGTH [MPa]} \\ \text{0.2\% PROOF STRESS [MPa]} \\ \text{TOTAL ELONGATION [\%]} \\ \text{SHEET THICKNESS [mm]} \end{array} \right\} = \left\{ \begin{array}{c} 604.8 \\ 399.8 \\ 23.6 \\ 1.4 \end{array} \right\}$$

NOTE THAT j=1 to 4

···(EXPRESSION 16)

$$P(j) = \left\{ \begin{array}{c} 620 \\ 390 \\ 24 \\ 1.41 \end{array} \right\} \quad \text{···(EXPRESSION 17)}$$

$$C0(i) = \left\{ \begin{array}{l} \text{FORMING SPEED [mm/sec]} \\ \text{BLANK-HOLDER PRESSURE [Ton]} \end{array} \right\} = \left\{ \begin{array}{c} 50.0 \\ 151.0 \end{array} \right\}$$

NOTE THAT i=1 to 2

···(EXPRESSION 18)

$$T1(i,j) = \left[ \begin{array}{cccc} -0.5 & -0.5 & 0.5 & 0.5 \\ 0.5 & 0.5 & 0.5 & 0.5 \end{array} \right] \quad \text{···(EXPRESSION 19)}$$

$$C0'(i) = \left\{ \begin{array}{l} \text{FORMING SPEED [mm/sec]} \\ \text{BLANK-HOLDER PRESSURE [Ton]} \end{array} \right\} = \left\{ \begin{array}{c} 50.6 \\ 151.10 \end{array} \right\}$$

···(EXPRESSION 20)

The press-process is started in accordance with the correction value "C0'(i)" of the forming conditions. After the press-process is started, the punch reaction force during the press-process is measured by using the punch reaction force measuring unit 103e as stated above, and the maximum value of the measured punch reaction force is stored in a recording medium provided at the condition setting calculation device 104 every time when the press-process is performed.

The forming condition calculation portion 104f of the condition setting calculation device 104 judges whether a moving average value of 10 points of the punch reaction forces stored in the recording medium is within the tolerance range which is set in advance or not, and when it is not within the tolerance range, the blank-holder pressure is adjusted as stated above, and the press-process is continued.

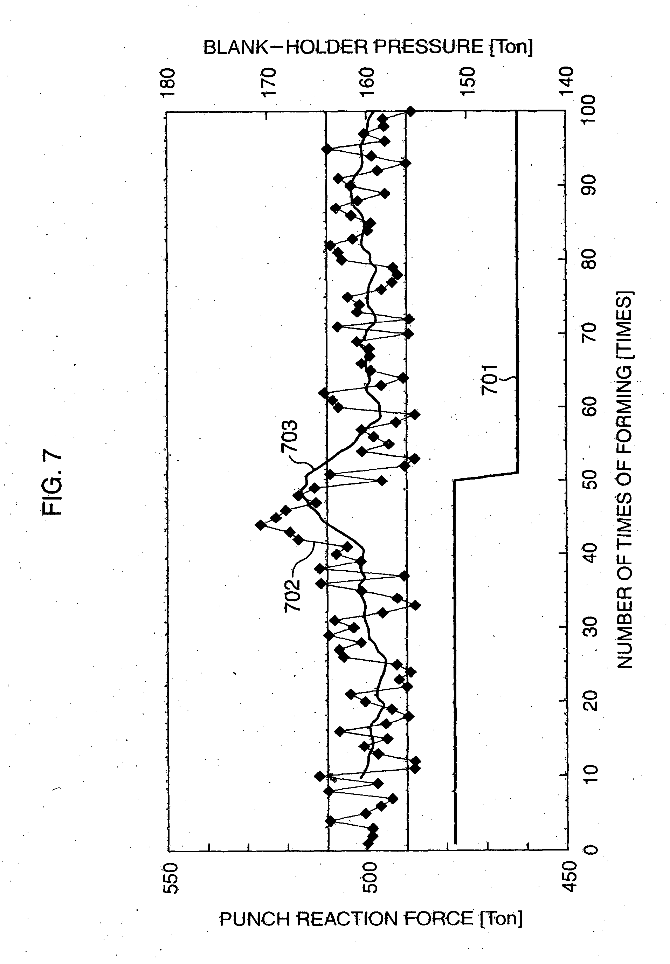

In an example shown in Fig. 7, a moving average 703 of 10 points of a measured value 702 of the punch reaction force exceeds the tolerance range (450 [Ton] or more and 550 [Ton] or less) when the press-processes are performed for approximately 50 times. Accordingly, a blank-holder pressure 701 is reduced from 150 [Ton] to 145 [Ton], and the press-process is continued to make the moving average 703 of the 10 points of the measured values 702 of the punch reaction force is within the tolerance range.

Concretely speaking, for example, when the measured value "S(k)" of the state quantity defined from the maximum value of the punch reaction force becomes as in an (expression 21) shown in the following, the correction value "C0'(i)" of the forming conditions shown in the (expression 20), the influence function matrix "T2(i, k)" as in a following (expression 22), and the standard value "S0(k)" of the state quantity as in a following (expression 23) are substituted to the (expression 2), and the correction value "C(i)" of the forming conditions as in a following (expression 24) is obtained. Incidentally, in the above description, the influence function matrix "T2(i, k)" is to be set in advance.
[Formula7]

$$S(k) = \left\{ 520 \right\} \quad \cdots \text{(EXPRESSION 21)}$$

$$T2(i,k) = \left[ -0.5 \right] \quad \cdots \text{(EXPRESSION 22)}$$
$$\text{NOTE THAT } k=1$$

$$S0(k) = \left\{ \begin{array}{l} \text{PUNCH REACTION FORCE [Ton]} \\ \text{MOLD DISTORTION } [\mu] \end{array} \right\} = \left\{ \begin{array}{l} 500 \\ 901 \end{array} \right\}$$
$$\cdots \text{(EXPRESSION 23)}$$

$$C(i) = \left\{ \begin{array}{l} \text{FORMING SPEED [mm/sec]} \\ \text{BLANK-HOLDER PRESSURE [Ton]} \end{array} \right\} = \left\{ \begin{array}{l} 53.0 \\ 144.8 \end{array} \right\}$$
$$\text{NOTE THAT } i=1 \text{ to } 2 \qquad \cdots \text{(EXPRESSION 24)}$$

As stated above, in the present example, the blank-holder pressure is adjusted so that the punch reaction force is within the tolerance range when the punch reaction force during the press-process exceeds the tolerance range, and the press-process is continued with the adjusted blank-holder pressure, in addition to the material characteristic data received from the material characteristic data providing device 101. Therefore, it becomes possible to reduce the occurrence of defective products further more, and to perform the press-process of the predetermined number of materials to be processed 300 more adequately.

Incidentally, in the present example, a case is described as an example when the blank-holder pressure is adjusted so that the punch reaction force is within the tolerance range, and the press-process is continued with the adjusted blank-holder pressure. However, it is not limited to the embodiment as stated above, and at least any one of the blank-holder pressure, the forming speed, or the mold temperature may be adjusted so that the state quantity exceeding the tolerance range is within the tolerance range, when the state quantity of at least any one of the punch reaction force, the mold temperature, the mold distortion amount, the deformation amount of the material to be processed 300, or the temperature of the material to be processed 300 exceeds the tolerance range during the press-process.

Besides, a current value and an actual performance value in the past of the state quantity such as the punch reaction force are compared, and process conditions such as the blank-holder pressure may be adjusted in accordance with the compared result. Concretely speaking, for example, when a difference between the current value and the actual performance value in the past of the state quantity such as the punch reaction force exceeds a predetermined value, the blank-holder pressure is adjusted so that the difference does not exceed the predetermined value.

Further, the moving average value of the 10 points of the state quantity of the punch reaction force and so on is to be judged whether it is within the tolerance range set in advance or not, but the moving average value of the state quantity within a predetermined time may be judged whether it is within the tolerance range set in advance or not.

-Fifth Example-

Next, a fifth example is described.

As stated above, the condition setting calculation device 104 receives the actual performance values of the tensile strength, the 0.2% proof stress, the total elongation, and the sheet thickness from the material characteristic data providing device 101 as the material characteristic data also in the present example. However, in the present example, the received material characteristic data is encrypted in the material characteristic data providing device 101, and the press-forming is performed in a procedure described in the first example after the material characteristic data is decrypted in the condition setting calculation device 104. At this time, the material characteristic data providing device 101 is managed by a material manufacturer, and a transmission history file (client name, connection date and time, amount of transmission data, and so on) is updated every time when the material characteristic data is transmitted to a customer using the condition setting calculation device 104. The transmission history file is periodically aggregated to bill in accordance with a total communication amount. Accordingly, it is possible for the customer to obtain accurate material characteristic data by each material while securing a confidentiality of the data. Therefore, it is not necessary for the operator to experientially correct the forming conditions each time, and an effect can be obtained in which a quality variation of the formed products is reduced.. Besides, works to prepare a conventional paper-based mil sheet are drastically reduced for the material manufacturer by the encryption and the billing. In addition, effects of preventing reuses (unauthorized copy) of the material characteristic data, and further enabling to cover administrative and maintenance expense of this system can be obtained, while securing the confidentiality of the material characteristic data.

Besides, in this case, the program codes of the software in themselves realize the functions of the embodiments, and therefore, the program codes in themselves, a means to provide the program codes to the computer, for example, a recording medium storing such program codes may constitute the present invention. As the recording medium storing such program codes, for example, a flexible disk, a hard disk, an optical disk, a magnetic optical disk, a CD-ROM, a magnetic tape, a non-volatile memory card, a ROM, and so on can be used.

Besides, it goes without saying that the program codes are included in the present invention when the program codes work together with an OS (operating system), other application software, or the like operating on the computer to thereby realize the functions of the embodiments, in addition to the case when the computer executes the provided program codes to thereby realize the functions of the embodiments.

Further, it goes without saying that a case is also included in the present invention when the provided program codes are stored in a memory included in a function expansion board of the computer or a function expansion unit connected to the computer, and thereafter, a CPU and so on included in the function expansion board or the function expansion unit perform a part or all of the actual processes based on instructions of the program codes, and the functions of the embodiments are realized by the processes.

**Claims**

1.  A press-forming system having a press-forming apparatus (102) press-forming a material, a user side computer (104) performing instructions to the press-forming for the press-forming apparatus (102), a material characteristic database (106) storing a material production lot number for identifying the material to be press-formed at the press-forming apparatus (102) and material characteristic data composed of one or more selected from sheet thickness, yield stress, tensile strength, 0.2% proof stress, elongation, n-value, r-value, relational expression between a stress and a strain, hardness, temperature, surface roughness, friction coefficient and lubricant film thickness of the material to be identified by the material production lot number correspondingly, and a server side computer (101) connected to the user side computer (104) via a network,

    wherein the user side computer comprises:

       a material production lot number input portion (104b) inputting the material production lot number; and
       a material production lot number transmission portion (104c) transmitting the material production lot number input by said material production lot number input portion (104b),

    wherein the server side computer (101) comprises:

       a material production lot number receiving portion (101a) receiving the material production lot number transmitted by said material production lot number transmission portion (104c), a material characteristic data encrypting portion (101c) encrypting the material characteristic data, and
       a material characteristic data transmission portion (101d) transmitting the encrypted material characteristic data stored in the database (106) in correspondence with the material production lot number received by said material production lot number receiving portion (101a),

    wherein the user side computer (104) further comprises:

       a material characteristic data receiving portion (104d) receiving the encrypted material characteristic data transmitted by said material characteristic data transmission portion (101d),
a decrypting portion (104e) decrypting the encrypted material characteristic data, and
wherein the press-forming apparatus (102) has a punch (102d), a die (102a), and a blank-holder (102e), and comprises:
a process condition control portion (103) press-forming the material with a process condition based on the material characteristic data received by said material characteristic data receiving portion (104d).

2. The press-forming system according to claim 1,

wherein the user side computer (104) further comprises:
a process condition calculation portion (104f) calculating the process condition of the press-forming performed at the press-forming apparatus (102) by using the material characteristic data received by said material characteristic data receiving portion (104d), and
wherein said process condition control portion (103) press-forms the material with the process condition calculated by said process condition calculation portion (104f).

3. The press-forming system according to claim 2,
wherein said process condition control portion (103) controls at least any one of a moving speed of the punch (102d) or the die (102a), a mold temperature, or a blank-holder force based on the process condition calculated by said process condition calculation portion (104f).

4. The press-forming system according to claim 3,

wherein said process condition calculation portion (104f) calculates the process condition of at least any one of the moving speed of the punch (102d) or the die (102a), the mold temperature, or the blank-holder force by using a state quantity while the material is press-formed, in which the state quantity is at least any one of a punch reaction force, the mold temperature, a mold distortion amount, a deformation amount of the material, or a temperature of the material, and the material characteristic data received by said material characteristic data receiving portion (104d), and
wherein said process condition control portion (103) controls at least any one of the moving speed of the punch (102d) or the die (102a), the mold temperature, or the blank-holder force based on the process condition calculated by said process condition calculation portion (104f).

5. The press-forming system according to claim 4,

wherein the press-forming apparatus (102) further comprises:
a measuring portion (103d, 103e, 103f, 103g, 103j) measuring the state quantity of at least any one of the punch reaction force, the mold temperature, the mold distortion amount, the formation amount of the material, or the temperature of the material when the material is press-formed, and
wherein said process condition calculation portion (104f) calculates the process condition of at least any one of the moving speed of the punch (102d) or the die (102a), the mold temperature, or the blank-holder force by using the state quantity measured by said measuring portion (103d, 103e, 103f, 103g, 103j) and the material characteristic data received by said material characteristic data receiving portion (104d).

6. The press-forming system according to claim 5,
wherein said process condition calculation portion (104f) calculates the process condition of at least any one of the moving speed of the punch (102d) or the die (102a), the mold temperature, or the blank-holder force so that the state quantity exceeding a tolerance range is within the tolerance range when the state quantity measured by said measuring portion (103d, 103e, 103f, 103g, 103j) exceeds the tolerance range.

7. The press-forming system according to claim 6,

wherein the user side computer (104) further comprises:
a storage portion (103h) storing the state quantity measured by said measuring portion, and
wherein said process condition calculation portion (104f) asks a moving average value of the state quantity within a time or of the number of times by using the state quantity stored in said storage portion (103h), and calculates the process condition of at least any one of the moving speed of the punch (102d) or the die (102a), the mold temperature, or the blank-holder force so that the asked moving average value is within the tolerance range.

**8.** The press-forming system according to claim 5,

wherein the user side computer (104) further comprises:
a storage portion (103h) storing the state quantity measured by said measuring portion (103d, 103e, 103f, 103g, 103j), and
wherein said process condition calculation portion (104f) compares a current state quantity measured by said measuring portion (103d, 103e, 103f, 103g, 103j) with a past state quantity stored in said storage portion, and calculates the process condition of at least any one of the moving speed of the punch (102d) or the die (102a), the mold temperature or the blank-holder force in accordance with the compared result.

**9.** The press-forming system according to claim 2,

wherein the user side computer (104) further comprises:
a second material characteristic data input portion inputting a second material characteristic data different from the material characteristic data received by said material characteristic data receiving portion (104d), and
wherein said process condition calculation portion (104f) calculates the process condition performed at the press-forming apparatus (102) by using the second material characteristic data inputted by said second material characteristic data input portion and the material characteristic data received by said material characteristic data receiving portion (104d).

**10.** The press-forming system according to claim 9,
wherein the second material characteristic data is data obtained before the material is formed by the press-forming apparatus (102).

**11.** The press-forming system according to claim 9,
wherein the material characteristic data received by said material characteristic data receiving portion is a representative value of a production lot to which the material press-formed at the press-forming apparatus (102) is belonging, and
the second material characteristic data inputted by said second material characteristic data input portion is a value of the material press-formed at the press-forming apparatus (102) as it is.

**12.** The press-forming system according to claim 1,
wherein said material production lot number input portion (104b) has at least any one of an operation element operated by a user, a first reading portion reading information of a barcode, a second reading portion reading information of an IC tag, or a third reading portion reading information of a disk recording medium.

**13.** The press-forming system according to claim 1, further comprising:
a billing portion billing in accordance with the transmission of the material characteristic data of the server side computer (101).

**14.** A press-forming method, comprising the steps of:

inputting a material production lot number identifying a material to be press-formed by a user side computer (104);
transmitting the material production lot number inputted by said step of inputting the material production lot number from the user side computer (104) to a server side computer (101) via a network;
receiving the material production lot number transmitted by said step of transmitting the material production lot number by the server side computer (101);
encrypting a material characteristic data composed of one or more selected from sheet thickness, yield stress, tensile strength, 0.2% proof stress, elongation, n-value, r-value, relational expression between a stress and a strain, hardness, temperature, surface roughness, friction coefficient and lubricant film thickness stored in a material characteristic database in correspondence with the material production lot number received by said step of receiving the material production lot number;
transmitting the encrypted material characteristic data from the server side computer (101) to the user side computer (104) via a network;
receiving the encrypted material characteristic data transmitted by said step of transmitting the material characteristic data by the user side computer (104),

decrypting the encrypted material characteristic data, and
press-forming the material with a process condition based on the material characteristic data received by said step of receiving the material characteristic data.

**15.** A computer program product for designing circuit and comprising instructions which, when the program is executed by a computer, cause the computer to carry out the following steps of:

inputting a material production lot number identifying a material to be press-formed by a user side computer (104);
transmitting the material production lot number inputted by said step of inputting the material production lot number from the user side computer (104) to a server side computer (101) via a network;
receiving the material production lot number transmitted by said step of transmitting the material production lot number by the server side computer (101);
encrypting a material characteristic data composed of one or more selected from sheet thickness, yield stress, tensile strength, 0.2% proof stress, elongation, n-value, r-value, relational expression between a stress and a strain, hardness, temperature, surface roughness, friction coefficient and lubricant film thickness stored in a material characteristic database in correspondence with the material production lot number received by said step of receiving the material production lot number;
transmitting the encrypted material characteristic data from the server side computer (101) to the user side computer (104) via a network;
receiving the encrypted material characteristic data transmitted by said step of transmitting the material characteristic data by the user side computer (104);
decrypting the encrypted material characteristic data, and
controlling a press-forming apparatus (102) with a process condition based on the material characteristic data received by said step of receiving the material characteristic data.

**Patentansprüche**

**1.** Pressformsystem mit einer Pressformvorrichtung (102), die ein Material pressformt, einem anwenderseitigen Computer (104), der Befehle zum Pressformen für die Pressformvorrichtung (102) durchführt, einer Materialkennwert-Datenbank (106), die eine Materialproduktionslosnummer zum Identifizieren des an der Pressformvorrichtung (102) zu pressformenden Materials und Materialkennwertdaten speichert, die sich aus Blechdicke, Fließspannung, Zugfestigkeit, 0,2-%-Dehngrenze, Dehnung, n-Wert, r-Wert, Vergleichsausdruck zwischen Spannung und Dehnung, Härte, Temperatur, Oberflächenrauheit, Reibungskoeffizient und/oder Schmierfilmdicke des durch die Materialproduktionslosnummer entsprechend zu identifizierenden Materials zusammensetzen, und einem serverseitigen Computer (101), der mit dem anwenderseitigen Computer (104) über ein Netzwerk verbunden ist, wobei der anwenderseitige Computer aufweist:

einen Materialproduktionslosnummer-Eingabeabschnitt (104b), der die Materialproduktionslosnummer eingibt; und
einen Materialproduktionslosnummer-Sendeabschnitt (104c), der die durch den Materialproduktionslosnummer-Eingabeabschnitt (104b) eingegebene Materialproduktionslosnummer sendet,
wobei der serverseitige Computer (101) aufweist:
einen Materialproduktionslosnummer-Empfangsabschnitt (101a), der die durch den Materialproduktionslosnummer-Sendeabschnitt (104c) gesendete Materialproduktionslosnummer empfängt, einen Materialkennwertdaten-Verschlüsselungsabschnitt (101c), der die Materialkennwertdaten verschlüsselt, und einen Materialkennwertdaten-Sendeabschnitt (101d), der die verschlüsselten Materialkennwertdaten sendet, die in der Datenbank (106) in Entsprechung zu der durch den Materialproduktionslosnummer-Empfangsabschnitt (101a) empfangenen Materialproduktionslosnummer gespeichert sind,
wobei der anwenderseitige Computer (104) ferner aufweist:

einen Materialkennwertdaten-Empfangsabschnitt (104d), der die durch den Materialkennwertdaten-Sendeabschnitt (101d) gesendeten verschlüsselten Materialkennwertdaten empfängt,
einen Entschlüsselungsabschnitt (104e), der die verschlüsselten Materialkennwertdaten entschlüsselt, und
wobei die Pressformvorrichtung (102) eine Patrize (102d), eine Matrize (102a) und einen Niederhalter (102e) hat und aufweist:
einen Prozessbedingungs-Steuerabschnitt (103), der das Material mit einer Prozessbedingung auf der Grundlage der durch den Materialkennwertdaten-Empfangsabschnitt (104d) empfangenen Materialkennwertdaten pressformt.

2. Pressformsystem nach Anspruch 1,
wobei der anwenderseitige Computer (104) ferner aufweist:

einen Prozessbedingungs-Berechnungsabschnitt (104f), der die Prozessbedingung des an der Pressformvorrichtung (102) durchgeführten Pressformens mit Hilfe der durch den Materialkennwertdaten-Empfangsabschnitt (104d) empfangenen Materialkennwertdaten berechnet, und
wobei der Prozessbedingungs-Steuerabschnitt (103) das Material mit der durch den Prozessbedingungs-Berechnungsabschnitt (104f) berechneten Prozessbedingung pressformt.

3. Pressformsystem nach Anspruch 2,
wobei der Prozessbedingungs-Steuerabschnitt (103) eine Bewegungsgeschwindigkeit der Patrize (102d) oder der Matrize (102a), eine Werkzeugtemperatur und/oder eine Niederhalterkraft auf der Grundlage der durch den Prozessbedingungs-Berechnungsabschnitt (104f) berechneten Prozessbedingung steuert.

4. Pressformsystem nach Anspruch 3,
wobei der Prozessbedingungs-Berechnungsabschnitt (104f) die Prozessbedingung der Bewegungsgeschwindigkeit der Patrize (102d) oder der Matrize (102a), der Werkzeugtemperatur und/oder der Niederhalterkraft mit Hilfe einer Zustandsgröße, während das Material pressgeformt wird, wobei die Zustandsgröße eine Patrizenreaktionskraft, die Werkzeugtemperatur, ein Werkzeugverzugsbetrag, ein Verformungsbetrag des Materials und/oder eine Temperatur des Materials ist, sowie der durch den Materialkennwertdaten-Empfangsabschnitt (104d) empfangenen Materialkennwertdaten berechnet, und
wobei der Prozessbedingungs-Steuerabschnitt (103) die Bewegungsgeschwindigkeit der Patrize (102d) oder der Matrize (102a), die Werkzeugtemperatur und/oder die Niederhalterkraft auf der Grundlage der durch den Prozessbedingungs-Berechnungsabschnitt (104f) berechneten Prozessbedingung steuert.

5. Pressformsystem nach Anspruch 4,
wobei die Pressformvorrichtung (102) ferner aufweist:

einen Messabschnitt (103d, 103e, 103f, 103g, 103j), der die Zustandsgröße der Patrizenreaktionskraft, der Werkzeugtemperatur, des Werkzeugverzugsbetrags, des Formungsbetrags des Materials und/oder der Temperatur des Materials misst, wenn das Material pressgeformt wird, und
wobei der Prozessbedingungs-Berechnungsabschnitt (104f) die Prozessbedingung der Bewegungsgeschwindigkeit der Patrize (102d) oder der Matrize (102a), der Werkzeugtemperatur und/oder der Niederhalterkraft mit Hilfe der durch den Messabschnitt (103d, 103e, 103f, 103g, 103j) gemessenen Zustandsgröße und der durch den Materialkennwertdaten-Empfangsabschnitt (104d) empfangenen Materialkennwertdaten berechnet.

6. Pressformsystem nach Anspruch 5,
wobei der Prozessbedingungs-Berechnungsabschnitt (104f) die Prozessbedingung der Bewegungsgeschwindigkeit der Patrize (102d) oder der Matrize (102a), der Werkzeugtemperatur und/oder der Niederhalterkraft so berechnet, dass die einen Toleranzbereich übersteigende Zustandsgröße im Toleranzbereich liegt, wenn die durch den Messabschnitt (103d, 103e, 103f, 103g, 103j) gemessene Zustandsgröße den Toleranzbereich übersteigt.

7. Pressformsystem nach Anspruch 6,
wobei der anwenderseitige Computer (104) ferner aufweist:

einen Speicherabschnitt (103h), der die durch den Messabschnitt gemessene Zustandsgröße speichert, und
wobei der Prozessbedingungs-Berechnungsabschnitt (104f) einen gleitenden Mittelwert der Zustandsgröße in einer Zeit oder der Häufigkeit mit Hilfe der im Speicherabschnitt (103h) gespeicherten Zustandsgröße abfragt und die Prozessbedingung der Bewegungsgeschwindigkeit der Patrize (102d) oder der Matrize (102a), der Werkzeugtemperatur und/oder der Niederhalterkraft so berechnet, dass der abgefragte gleitende Mittelwert im Toleranzbereich liegt.

8. Pressformsystem nach Anspruch 5,
wobei der anwenderseitige Computer (104) ferner aufweist:

einen Speicherabschnitt (103h), der die durch den Messabschnitt (103d, 103e, 103f, 103g, 103j) gemessene Zustandsgröße speichert, und

wobei der Prozessbedingungs-Berechnungsabschnitt (104f) eine durch den Messabschnitt (103d, 103e, 103f, 103g, 103j) gemessene aktuelle Zustandsgröße mit einer im Speicherabschnitt gespeicherten früheren Zustandsgröße vergleicht und die Prozessbedingung der Bewegungsgeschwindigkeit der Patrize (102d) oder der Matrize (102a), der Werkzeugtemperatur und/oder der Niederhalterkraft in Übereinstimmung mit dem Vergleichsergebnis berechnet.

9. Pressformsystem nach Anspruch 2,

wobei der anwenderseitige Computer (104) ferner aufweist:

einen zweiten Materialkennwertdaten-Eingabeabschnitt, der zweite Materialkennwertdaten eingibt, die sich von den durch den Materialkennwertdaten-Empfangsabschnitt (104d) empfangenen Materialkennwertdaten unterscheiden, und

wobei der Prozessbedingungs-Berechnungsabschnitt (104f) die an der Pressformvorrichtung (102) durchgeführte Prozessbedingung mit Hilfe der durch den zweiten Materialkennwertdaten-Eingabeabschnitt eingegebenen zweiten Materialkennwertdaten und der durch den Materialkennwertdaten-Empfangsabschnitt (104d) empfangenen Materialkennwertdaten berechnet.

10. Pressformsystem nach Anspruch 9,

wobei die zweiten Materialkennwertdaten Daten sind, die erhalten werden, bevor das Material durch die Pressformvorrichtung (102) geformt wird.

11. Pressformsystem nach Anspruch 9,

wobei die durch den Materialkennwertdaten-Empfangsabschnitt empfangenen Materialkennwertdaten ein repräsentativer Wert eines Produktionsloses sind, zu dem das an der Pressformvorrichtung (102) pressgeformte Material gehört, und die durch den zweiten Materialkennwertdaten-Eingabeabschnitt eingegebenen zweiten Materialkennwertdaten ein Wert des Materials sind, das an der Pressformvorrichtung (102) unverändert pressgeformt wird.

12. Pressformsystem nach Anspruch 1,

wobei der Materialproduktionslosnummer-Eingabeabschnitt (104b) ein durch einen Anwender bedientes Bedienelement, einen Informationen eines Barcodes auslesenden ersten Leseabschnitt, einen Informationen eines IC-Tags auslesenden zweiten Leseabschnitt und/oder einen Informationen eines Plattenaufzeichnungsmediums auslesenden dritten Leseabschnitt hat.

13. Pressformsystem nach Anspruch 1, das ferner aufweist:

einen Abrechnungsabschnitt, der in Übereinstimmung mit dem Senden der Materialkennwertdaten des serverseitigen Computers (101) abrechnet.

14. Pressformverfahren, das die Schritte aufweist:

Eingeben einer Materialproduktionslosnummer, die ein zu pressformendes Material identifiziert, durch einen anwenderseitigen Computer (104);

Senden der durch den Schritt des Eingebens der Materialproduktionslosnummer eingegebenen Materialproduktionslosnummer vom anwenderseitigen Computer (104) zu einem serverseitigen Computer (101) über ein Netzwerk;

Empfangen der durch den Schritt des Sendens der Materialproduktionslosnummer gesendeten Materialproduktionslosnummer durch den serverseitigen Computer (101);

Verschlüsseln von Materialkennwertdaten, die sich aus Blechdicke, Fließspannung, Zugfestigkeit, 0,2-%-Dehngrenze, Dehnung, n-Wert, r-Wert, Vergleichsausdruck zwischen Spannung und Dehnung, Härte, Temperatur, Oberflächenrauheit, Reibungskoeffizient und/oder Schmierfilmdicke zusammensetzen, die in einer Materialkennwert-Datenbank in Entsprechung zu der durch den Schritt des Empfangens der Materialproduktionslosnummer empfangenen Materialproduktionslosnummer gespeichert sind;

Senden der verschlüsselten Materialkennwertdaten vom serverseitigen Computer (101) zum anwenderseitigen Computer (104) über ein Netzwerk;

Empfangen der durch den Schritt des Sendens der Materialkennwertdaten gesendeten verschlüsselten Materialkennwertdaten durch den anwenderseitigen Computer (104),

Entschlüsseln der verschlüsselten Materialkennwertdaten und

Pressformen des Materials mit einer Prozessbedingung auf der Grundlage der durch den Schritt des Empfangens der Materialkennwertdaten empfangenen Materialkennwertdaten.

15. Computerprogrammprodukt zur Schaltungsgestaltung und mit Befehlen, die bei Ausführung des Programms durch einen Computer bewirken, dass der Computer die folgenden Schritte abarbeitet:

Eingeben einer Materialproduktionslosnummer, die ein zu pressformendes Material identifiziert, durch einen anwenderseitigen Computer (104);

Senden der durch den Schritt des Eingebens der Materialproduktionslosnummer eingegebenen Materialproduktionslosnummer vom anwenderseitigen Computer (104) zu einem serverseitigen Computer (101) über ein Netzwerk;

Empfangen der durch den Schritt des Sendens der Materialproduktionslosnummer gesendeten Materialproduktionslosnummer durch den serverseitigen Computer (101);

Verschlüsseln von Materialkennwertdaten, die sich aus Blechdicke, Fließspannung, Zugfestigkeit, 0,2-%-Dehngrenze, Dehnung, n-Wert, r-Wert, Vergleichsausdruck zwischen Spannung und Dehnung, Härte, Temperatur, Oberflächenrauheit, Reibungskoeffizient und/oder Schmierfilmdicke zusammensetzen, die in einer Materialkennwert-Datenbank in Entsprechung zu der durch den Schritt des Empfangens der Materialproduktionslosnummer empfangenen Materialproduktionslosnummer gespeichert sind;

Senden der verschlüsselten Materialkennwertdaten vom serverseitigen Computer (101) zum anwenderseitigen Computer (104) über ein Netzwerk;

Empfangen der durch den Schritt des Sendens der Materialkennwertdaten gesendeten verschlüsselten Materialkennwertdaten durch den anwenderseitigen Computer (104),

Entschlüsseln der verschlüsselten Materialkennwertdaten und

Steuern einer Pressformvorrichtung (102) mit einer Prozessbedingung auf der Grundlage der durch den Schritt des Empfangens der Materialkennwertdaten empfangenen Materialkennwertdaten.

## Revendications

1. Système de formage par presse présentant un appareil de formage par presse (102) formant par presse un matériau, un ordinateur côté utilisateur (104) mettant en oeuvre des instructions relatives au formage par presse pour l'appareil de formage par presse (102), une base de données de caractéristiques de matériau (106) stockant un numéro de lot de production de matériau destiné à identifier le matériau devant être formé par presse au niveau de l'appareil de formage par presse (102), et des données de caractéristiques de matériau constituées d'une ou plusieurs caractéristiques sélectionnées parmi une épaisseur de feuille, une résistance au formage, une résistance à la traction, une limite conventionnelle d'élasticité à 0,2 %, un allongement, une valeur « n », une valeur « r », une expression relationnelle entre une contrainte et une déformation, une dureté, une température, une rugosité de surface, un coefficient de frottement et une épaisseur de film lubrifiant du matériau devant être identifié par le numéro de lot de production de matériau, en conséquence, et un ordinateur côté serveur (101) connecté à l'ordinateur côté utilisateur (104), par l'intermédiaire d'un réseau ;

dans lequel l'ordinateur côté utilisateur comprend :

une partie d'entrée de numéro de lot de production de matériau (104b) appliquant en entrée le numéro de lot de production de matériau ; et

une partie de transmission de numéro de lot de production de matériau (104c) transmettant le numéro de lot de production de matériau appliqué en entrée par ladite partie d'entrée de numéro de lot de production de matériau (104b) ;

dans lequel l'ordinateur côté serveur (101) comprend :

une partie de réception de numéro de lot de production de matériau (101a) recevant le numéro de lot de production de matériau transmis par ladite partie de transmission de numéro de lot de production de matériau (104c), une partie de chiffrement de données de caractéristiques de matériau (101c) chiffrant les données de caractéristiques de matériau ; et

une partie de transmission de données de caractéristiques de matériau (101d) transmettant les données de caractéristiques de matériau chiffrées stockées dans la base de données (106) en correspondance avec le numéro de lot de production de matériau reçu par ladite partie de réception de numéro de lot de production de matériau (101a) ;

dans lequel l'ordinateur côté utilisateur (104) comprend en outre :

une partie de réception de données de caractéristiques de matériau (104d) recevant les données de caractéristiques de matériau chiffrées transmises par ladite partie de transmission de données de caractéristiques de matériau (101d) ;

une partie de déchiffrement (104e) déchiffrant les données de caractéristiques de matériau chiffrées ; et

dans lequel l'appareil de formage par presse (102) présente un poinçon (102d), un emporte-pièce (102a), et un serre-flan (102e), et comprend :

une partie de commande de condition de processus (103) formant par presse le matériau avec une condition de processus basée sur les données de caractéristiques de matériau reçues par ladite partie de réception de données de caractéristiques de matériau (104d).

2. Système de formage par presse selon la revendication 1,
dans lequel l'ordinateur côté utilisateur (104) comprend en outre :
une partie de calcul de condition de processus (104f) calculant la condition de processus du formage par presse mis en oeuvre au niveau de l'appareil de formage par presse (102) en utilisant les données de caractéristiques de matériau reçues par ladite partie de réception de données de caractéristiques de matériau (104d) ; et
dans lequel ladite partie de commande de condition de processus (103) forme par presse le matériau avec la condition de processus calculée par ladite partie de calcul de condition de processus (104f).

3. Système de formage par presse selon la revendication 2,
dans lequel ladite partie de commande de condition de processus (103) commande au moins une caractéristique quelconque parmi une vitesse de déplacement du poinçon (102d) ou de l'emporte-pièce (102a), une température de moule, ou une force de serre-flan sur la base de la condition de processus calculée par ladite partie de calcul de condition de processus (104f).

4. Système de formage par presse selon la revendication 3,
dans lequel ladite partie de calcul de condition de processus (104f) calcule la condition de processus d'au moins l'une quelconque parmi la vitesse de déplacement du poinçon (102d) ou de l'emporte-pièce (102a), la température de moule, ou la force de serre-flan, en utilisant une quantité d'état tandis que le matériau est formé par presse, dans laquelle la quantité d'état correspond à au moins l'une quelconque parmi une force de réaction de poinçon, la température de moule, une quantité de déformation de moule, une quantité de déformation du matériau, ou une température du matériau, et les données de caractéristiques de matériau reçues par ladite partie de réception de données de caractéristiques de matériau (104d) ; et
dans lequel ladite partie de commande de condition de processus (103) commande au moins l'une quelconque parmi la vitesse de déplacement du poinçon (102d) ou de l'emporte-pièce (102a), la température de moule ou la force de serre-flan, sur la base de la condition de processus calculée par ladite partie de calcul de condition de processus (104f).

5. Système de formage par presse selon la revendication 4,
dans lequel l'appareil de formage par presse (102) comprend en outre :
une partie de mesure (103d, 103e, 103f, 103g, 103j) mesurant la quantité d'état d'au moins l'une quelconque parmi la force de réaction de poinçon, la température de moule, la quantité de déformation de moule, la quantité de formation du matériau, ou la température du matériau lorsque le matériau est formé par presse ; et
dans lequel ladite partie de calcul de condition de processus (104f) calcule la condition de processus d'au moins l'une quelconque parmi la vitesse de déplacement du poinçon (102d) ou de l'emporte-pièce (102a), la température de moule, ou la force de serre-flan, en utilisant la quantité d'état mesurée par ladite partie de mesure (103d, 103e, 103f, 103g, 103j) et les données de caractéristiques de matériau reçues par ladite partie de réception de données de caractéristiques de matériau (104d).

6. Système de formage par presse selon la revendication 5,
dans lequel ladite partie de calcul de condition de processus (104f) calcule la condition de processus d'au moins l'une quelconque parmi la vitesse de déplacement du poinçon (102d) ou de l'emporte-pièce (102a), la température de moule ou la force de serre-flan, de sorte que la quantité d'état dépassant une plage de tolérance se situe dans la plage de tolérance lorsque la quantité d'état mesurée par ladite partie de mesure (103d, 103e, 103f, 103g, 103j) dépasse la plage de tolérance.

7. Système de formage par presse selon la revendication 6,
dans lequel l'ordinateur côté utilisateur (104) comprend en outre :

une partie de stockage (103h) stockant la quantité d'état mesurée par ladite partie de mesure ; et

dans lequel ladite partie de calcul de condition de processus (104f) demande une valeur moyenne mobile de la quantité d'état dans un délai, ou du nombre d'occurrences, en utilisant la quantité d'état stockée dans ladite partie de stockage (103h), et calcule la condition de processus d'au moins l'une quelconque parmi la vitesse de déplacement du poinçon (102d) ou de l'emporte-pièce (102a), la température de moule ou la force du serre-flan, de sorte que la valeur moyenne mobile demandée se situe dans la plage de tolérance.

8.  Système de formage par presse selon la revendication 5,
    dans lequel l'ordinateur côté utilisateur (104) comprend en outre :

    une partie de stockage (103h) stockant la quantité d'état mesurée par ladite partie de mesure (103d, 103e, 103f, 103g, 103j) ; et

    dans lequel ladite partie de calcul de condition de processus (104f) compare une quantité d'état en cours mesurée par ladite partie de mesure (103d, 103e, 103f, 103g, 103j) à une quantité d'état antérieure stockée dans ladite partie de stockage, et calcule la condition de processus d'au moins l'une quelconque parmi la vitesse de déplacement du poinçon (102d) ou de l'emporte-pièce (102a), la température de moule, ou la force de serre-flan conformément au résultat comparé.

9.  Système de formage par presse selon la revendication 2,
    dans lequel l'ordinateur côté utilisateur (104) comprend en outre :

    une seconde partie d'entrée de données de caractéristiques de matériau appliquant en entrée des secondes données de caractéristiques de matériau différentes des données de caractéristiques de matériau reçues par ladite partie de réception de données de caractéristiques de matériau (104d) ; et

    dans lequel ladite partie de calcul de condition de processus (104f) calcule la condition de processus mise en oeuvre au niveau de l'appareil de formage par presse (102) en utilisant les secondes données de caractéristiques de matériau appliquées en entrée par ladite seconde partie d'entrée de données de caractéristiques de matériau, et les données de caractéristiques de matériau reçues par ladite partie de réception de données de caractéristiques de matériau (104d).

10. Système de formage par presse selon la revendication 9,
    dans lequel les secondes données de caractéristiques de matériau sont des données obtenues avant que le matériau ne soit formé par l'appareil de formage par presse (102).

11. Système de formage par presse selon la revendication 9,
    dans lequel les données de caractéristiques de matériau reçues par ladite partie de réception de données de caractéristiques de matériau correspondent à une valeur représentative d'un lot de production auquel appartient le matériau formé par presse sur l'appareil de formage par presse (102) ; et

    les secondes données de caractéristiques de matériau appliquées en entrée par ladite seconde partie d'entrée de données de caractéristiques de matériau correspondent à une valeur du matériau formé par presse sur l'appareil de formage par presse (102) en l'état.

12. Système de formage par presse selon la revendication 1,
    dans lequel ladite partie d'entrée de numéro de lot de production de matériau (104b) présente au moins l'un quelconque parmi un élément d'opération exploité par un utilisateur, une première partie de lecture lisant des informations d'un code à barres, une deuxième partie de lecture lisant des informations d'une étiquette IC, ou une troisième partie de lecture lisant des informations d'un support d'enregistrement sur disque.

13. Système de formage par presse selon la revendication 1, comprenant en outre :
    une partie de facturation facturant conformément à la transmission des données de caractéristiques de matériau de l'ordinateur côté serveur (101).

14. Procédé de formage par presse, comprenant les étapes ci-dessous consistant à :

    appliquer en entrée un numéro de lot de production de matériau identifiant un matériau devant être formé par presse, par le biais d'un ordinateur côté utilisateur (104) ;

    transmettre le numéro de lot de production de matériau appliqué en entrée à ladite étape d'application en entrée du numéro de lot de production de matériau, de l'ordinateur côté utilisateur (104) à un ordinateur côté serveur (101), par l'intermédiaire d'un réseau ;

    recevoir le numéro de lot de production de matériau transmis à ladite étape de transmission du numéro de lot de production de matériau, par le biais de l'ordinateur côté serveur (101) ;

chiffrer des données de caractéristiques de matériau constituées d'une ou plusieurs caractéristiques sélectionnées parmi une épaisseur de feuille, une résistance au formage, une résistance à la traction, une limite conventionnelle d'élasticité à 0,2 %, un allongement, une valeur « n », une valeur « r », une expression relationnelle entre une contrainte et une déformation, une dureté, une température, une rugosité de surface, un coefficient de frottement et une épaisseur de film lubrifiant, lesquelles sont stockées dans une base de données de caractéristiques de matériau en correspondance avec le numéro de lot de production de matériau reçu à ladite étape de réception de numéro de lot de production de matériau ;

transmettre les données de caractéristiques de matériau chiffrées, de l'ordinateur côté serveur (101) à l'ordinateur côté utilisateur (104), par l'intermédiaire d'un réseau ;

recevoir les données de caractéristiques de matériau chiffrées transmises à ladite étape de transmission de données de caractéristiques de matériau, par le biais de l'ordinateur côté utilisateur (104) ;

déchiffrer les données de caractéristiques de matériau chiffrées ; et

former par presse le matériau avec une condition de processus basée sur les données de caractéristiques de matériau reçues à ladite étape de réception des données de caractéristiques de matériau.

15. Produit-programme informatique destiné à concevoir un circuit et comprenant des instructions qui, lorsque le programme est exécuté par un ordinateur, amènent l'ordinateur à mettre en oeuvre les étapes ci-dessous consistant à :

appliquer en entrée un numéro de lot de production de matériau identifiant un matériau devant être formé par presse, par le biais d'un ordinateur côté utilisateur (104) ;

transmettre le numéro de lot de production de matériau appliqué en entrée à ladite étape d'application en entrée du numéro de lot de production de matériau, de l'ordinateur côté utilisateur (104) à un ordinateur côté serveur (101), par l'intermédiaire d'un réseau ;

recevoir le numéro de lot de production de matériau transmis à ladite étape de transmission du numéro de lot de production de matériau, par le biais de l'ordinateur côté serveur (101) ;

chiffrer des données de caractéristiques de matériau constituées d'une ou plusieurs caractéristiques sélectionnées parmi une épaisseur de feuille, une résistance au formage, une résistance à la traction, une limite conventionnelle d'élasticité à 0,2 %, un allongement, une valeur « n », une valeur « r », une expression relationnelle entre une contrainte et une déformation, une dureté, une température, une rugosité de surface, un coefficient de frottement et une épaisseur de film lubrifiant, lesquelles sont stockées dans une base de données de caractéristiques de matériau en correspondance avec le numéro de lot de production de matériau reçu à ladite étape de réception de numéro de lot de production de matériau ;

transmettre les données de caractéristiques de matériau chiffrées, de l'ordinateur côté serveur (101) à l'ordinateur côté utilisateur (104), par l'intermédiaire d'un réseau ;

recevoir les données de caractéristiques de matériau chiffrées transmises à ladite étape de transmission de données de caractéristiques de matériau, par le biais de l'ordinateur côté utilisateur (104) ;

déchiffrer les données de caractéristiques de matériau chiffrées ; et

commander un appareil de formage par presse (102) avec une condition de processus basée sur les données de caractéristiques de matériau reçues à ladite étape de réception des données de caractéristiques de matériau.

## FIG. 1

101

| MATERIAL CHARACTERISTIC DATA PROVIDING DEVICE (SERVER SIDE COMPUTER) |

106

| MATERIAL CHARACTERISTIC DATABASE |

105

| CONDITION SETTING CALCULATION DEVICE (USER SIDE COMPUTER) | ~104

| CONTROL DEVICE | ~103

| PRESS-FORMING DEVICE | ~102

## FIG. 2

101

**MATERIAL CHARACTERISTIC DATA
PROVIDING DEVICE
(SERVER SIDE COMPUTER)**

104

| CONDITION SETTING
CALCULATION DEVICE
(USER SIDE COMPUTER) |

105

101a

| MATERIAL IDENTIFICATION
NUMBER RECEIVING PORTION |

101b

| MATERIAL CHARACTERISTIC
SEARCH PORTION |

106

| MATERIAL
CHARACTERISTIC
DATABASE |

101c

| MATERIAL CHARACTERISTIC DATA
ENCRYPTION PORTION |

101d

| MATERIAL CHARACTERISTIC DATA
TRANSMISSION PORTION |

101e

| BILLING PORTION |

EP 1 787 737 B1

FIG. 3

EP 1 787 737 B1

## FIG. 4A

401

MATERIAL CHARACTERISTIC INQUIRY SCREEN

LOT NUMBER ○△□ × ○△□ ×

TRANSMISSION

## FIG. 4B

402

MATERIAL CHARACTERISTIC RECEIVE SCREEN

LOT NUMBER ○△□ × ○△□ ×

| | |
|---|---|
| TENSILE STRENGTH | 620MPa |
| 0.2% PROOF STRESS | 390MPa |
| TOTAL ELONGATION | 24% |
| SHEET THICKNESS | 1.410mm |
| DATE OF MANUFACTURE | 2004/○○/△△ |

## FIG. 5

Ⓢ

② ─────────────────────────────

S1
MATERIAL TO BE
PROCESSED IS SET AT PRESS−FORMING
DEVICE ?    NO

YES

S2
MATERIAL
IDENTIFICATION NUMBER IS INPUTTED
?    NO

YES

TRANSMIT MATERIAL IDENTIFICATION NUMBER TO SERVER SIDE COMPUTER  ─S3

S4
MATERIAL
IDENTIFICATION NUMBER IS RECEIVED
?    NO

YES

SEARCH MATERIAL CHARACTERISTIC DATA  ─S5

ENCRYPT MATERIAL CHARACTERISTIC DATA  ─S6

TRANSMIT MATERIAL CHARACTERISTIC DATA TO USER SIDE COMPUTER  ─S7

S8
MATERIAL
CHARACTERISTIC DATA IS RECEIVED
?    NO

YES

DECRYPT MATERIAL CHARACTERISTIC DATA  ─S9

STORE MATERIAL CHARACTERISTIC DATA  ─S10

S11
BASIC
FORMING CONDITION IS INPUTTED
?    NO

YES

STORE BASIC FORMING CONDITION  ─S12

MEASURE MATERIAL CHARACTERISTIC  ─S13

READ HISTORY OF STATE QUANTITY  ─S14

CORRECT FORMING CONDITION  ─S15

①

# FIG. 6

①

↓

```
START PROCESS OF
MATERIAL TO BE PROCESSED   ~S16
```

↓

```
MEASURE STATE QUANTITY   ~S17
```

↓

S18

```
       DIFFERENCE
   BETWEEN MEASURED
STATE QUANTITY AND TARGET
STATE QUANTITY IS WITHIN
   TOLERANCE RANGE
         ?
```
→ NO →

```
CORRECT FORMING
   CONDITION        ~S21
```

YES

↓

S19

```
   FORMING OF
MATERIAL TO BE
PROCESSED IS
  COMPLETED
      ?
```
→ NO

YES

↓

```
STORE MEASURED STATE QUANTITY   ~S20
```

↓

②

29

# FIG. 7

EP 1 787 737 B1

Axis labels: PUNCH REACTION FORCE [Ton], BLANK-HOLDER PRESSURE [Ton], NUMBER OF TIMES OF FORMING [TIMES]

Data series labels: 701, 702, 703

**EP 1 787 737 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5285700 A
- JP H6246499 A
- JP H7265957 A
- JP H10128451 A
- JP H8300048 A
- JP H7266100 A
- WO 9964939 A1
- EP 0675419 A1